# EUROPEAN PATENT SPECIFICATION

(11) **EP 4 519 132 B1**
(45) Date of publication and mention of the grant of the patent: **25.02.2026**
(21) Application number: 23725814.0
(22) Date of filing: 28.04.2023
(51) Int. Cl.: B60T 13/68, B60T 8/32, B60T 17/18, B62L 3/00

(54) **BRAKING SYSTEM OF THE BRAKE-BY-WIRE TYPE FOR MOTORCYCLES**
BREMSSYSTEM VOM TYP BRAKE-BY-WIRE FÜR MOTORRÄDER
SYSTEME DE FREINAGE DU TYPE INTÉGRÉ POUR MOTOCYCLETTES

(30) Priority: 03.05.2022 IT 202200008957
(43) Date of publication of application: 12.03.2025
(73) Proprietor: Brembo S.p.A., 24035 Curno (Bergamo) (IT)
(72) Inventor: DENTI, Francantonio, 24035 Curno, BERGAMO (IT); FOLATTI, Matteo, 24035 Curno, BERGAMO (IT); MAZZOLENI, Samuele, 24035 Curno, BERGAMO (IT); BREMBILLA, Mauro, 24035 Curno, BERGAMO (IT); BERTAGNA, Alessandro, 24035 Curno, BERGAMO (IT)
(74) Representative: Mitola, Marco
(86) International application number: PCT/IB2023/054437
(87) International publication number: WO 2023/214272

(56) References cited:
- DE-A1- 102005 043 267
- DE-A1- 102019 211 537
- DE-A1- 3 048 847

## Description

### FIELD OF APPLICATION

The present invention further relates to a braking system of the brake-by-wire (BBW) type, in particular for motorcycles.

### BACKGROUND ART

In motorcycles, there are brake-by-wire type braking systems in which the user can manually operate two separate manual controls, typically a lever on the handlebar, and a pedal, so as to send a request for braking action to an appropriate control unit.

Such a request for braking action is switched to actuation of one or more electric motors acting on the friction elements (typically pads, but also shoes) of the braking devices with which the motorcycle is provided. Under normal operating conditions, the user thus does not directly command the actuation of the braking devices but sends a braking request which is met by said electric motors, by means of a control unit.

In case of a malfunction, the system must allow a hydraulic back-up to ensure that the user can at least partially brake the motorcycle by means of direct action on the manual operating devices.

The motorcycle solutions of the prior art do not allow operating the hydraulic back-up by means of both controls (lever and brake pedal) in case of failure of the E/E system (ECU, actuators, sensors, etc.) or in case of lack of power supply (disconnected battery) combined with the need to have a partially fluid-free brake system actuation (at least one fully electromechanical caliper or axle - DRY). Finally, the need is felt to provide braking systems being compatible with electric vehicles (blending with regenerative braking, residual torque reduction). A solution according to the preamble of claim 1 is disclosed by DE 10 2019 211537 A1.

### PRESENTATION OF THE INVENTION

The need is thus felt in the art to provide a braking system which allows solving the technical problems mentioned with reference to the prior art.

The need is met by a braking system according to claim 1.

In particular, such a need is met by a braking system for a motorcycle comprising a first braking device operatively connectable to a first wheel of the motorcycle, and provided with a first hydraulic supply circuit, first manually operated hydraulic device provided with a first manually operated control and a first hydraulic delivery circuit fluidly connectable to the first hydraulic supply circuit, a second braking device operatively connectable to said first wheel or to a second wheel of the motorcycle, and provided with a second hydraulic supply circuit, distinct from or coinciding with the first hydraulic supply circuit, a second manually operated hydraulic device provided with a second manually operated control and a second hydraulic delivery circuit fluidly connectable to the second hydraulic supply circuit, an electric actuator having electric or electromechanical motor means operatively connected to an electrically or electromechanically operated float fluidly connected to a delivery of the electric actuator connected to said first hydraulic supply circuit and/or said second hydraulic supply circuit, where said first and second hydraulic delivery circuits are fluidly connected to each other by the interposition of valve means, where the braking system is provided with a processing and control unit, operatively connected to said electric actuator and said valve means, the processing and control unit being programmed so that: in standard operation, in case of actuation of the first manually operated hydraulic device and/or the second manually operated hydraulic device, it translates the electrically or electromechanically operated float so as to fluidly disconnect the first and/or second hydraulic supply circuit from the first and/or second hydraulic delivery circuit and simultaneously actuate the at least a first braking device and/or the at least a second braking device.

According to a possible embodiment of the present invention, the processing and control unit is programmed so that: in back-up operation, it backs up or allows the backing up of the electrically or electromechanically operated float so as to allow the fluid connection between the first and/or second hydraulic supply circuit from the first and/or second hydraulic delivery circuit and simultaneously actuate the at least a first braking device and/or the at least a second braking device, when at least one of the first and second manually operated hydraulic devices is operated.

According to a possible embodiment of the present invention, said valve means comprise a diverter valve having a first inlet port, fluidly connected to the first hydraulic delivery circuit, a second inlet port fluidly connected to the second hydraulic delivery circuit, and a single outlet port in fluid communication with the hydraulic delivery circuit, between said first and second hydraulic delivery circuits, having greater pressure.

According to a possible embodiment of the present invention, the first hydraulic delivery circuit is provided with at least one control valve, which in standard operation connects the first hydraulic delivery circuit to a first hydraulic braking simulator, and in back-up operation, connects the first hydraulic delivery circuit to the first inlet port of the diverter valve, and/or where the second hydraulic delivery circuit is provided with at least one control valve, which in standard operation connects the second hydraulic delivery circuit to a second hydraulic braking simulator, and in back-up operation, connects the second hydraulic delivery circuit to the second inlet port of the diverter valve.

According to a possible embodiment of the present invention, the first manually operated device is provided with a first hydraulic fluid tank having a preloaded membrane which ensures an overpressure to compensate for a different geodetic height with respect to a second hydraulic fluid tank of the second manually operated device.

According to a possible embodiment of the present invention, said valve means comprise a slide valve controlled by the processing and control unit so that: in the standard condition, the slide valve fluidly separates the first hydraulic delivery circuit, the second hydraulic delivery circuit, and the delivery of the electric actuator from one another, where said delivery supplies said first and second hydraulic supply circuits, in back-up mode, the slide valve puts into communication the first hydraulic delivery circuit with the first hydraulic supply circuit, and the second hydraulic delivery circuit with the second hydraulic supply circuit, and where the slide valve hydraulically separates the first and second hydraulic supply circuits.

According to a possible embodiment of the present invention, the system comprises a main hydraulic fluid tank, which supplies a first tank of the first manually operated hydraulic device and a second tank of the second manually operated hydraulic device, where said main tank is preloaded, and where said preload is such as not to generate a pressure which results in an actuation of the braking devices, where said valve means comprise a slide valve which selectively connects or disconnects the first and second hydraulic delivery circuits to/from the first and second hydraulic supply circuits, respectively.

According to a possible embodiment of the present invention, the system comprises a first hydraulic braking simulator connected to the first hydraulic delivery circuit and a second hydraulic braking simulator connected to the second hydraulic delivery circuit, each of said hydraulic braking simulators being provided with a single hydraulic tank, where said valve means 68 comprise a slide valve which selectively connects or disconnects the first and second hydraulic delivery circuits to/from the first and second supply circuits, respectively.

According to a possible embodiment of the present invention, said slide valve is divided into four two-way valves, preferably two normally closed valves and two normally open valves.

According to a possible embodiment of the present invention, the system comprises a single brake fluid tank, which supplies the first and second hydraulic delivery circuits, upstream of said valve means, said single tank being preloaded under pressure.

According to a possible embodiment of the present invention, the first and second hydraulic supply circuits are fluidly connected to two braking devices arranged at the front of the vehicle.

According to a possible embodiment of the present invention, the first and second hydraulic supply circuits are coincident and fluidly connected to a single braking device at the rear of the vehicle.

According to a possible embodiment of the present invention, said first and second manually operated hydraulic devices are arranged mutually in series and in series with the first and second hydraulic supply circuits, where each manually operated hydraulic device comprises a piston provided with a one-way lip seal at the outlet of the device itself.

According to a possible embodiment of the present invention, the system comprises a brake fluid tank connected directly upstream of the electric actuator by means of a plurality of series of one-way valves which allow the leakage of fluid with the system at atmospheric pressure while preventing the passage in the opposite direction during the actuations of the braking devices in both standard operation and back-up operation.

According to a possible embodiment of the present invention, said valve means comprise two normally open hydraulic valves which fluidly connect both the manually operated hydraulic devices and two normally closed hydraulic valves to allow the passage of pressure between said manually operated hydraulic devices and the hydraulic supply circuits and prevent the absorption of volume by absorbers connected to the manually operated hydraulic devices in back-up.

According to a possible embodiment of the present invention, said braking devices comprise disc brakes and/or drum brakes.

The present invention further relates to a motorcycle comprising a braking system as described above.

### DESCRIPTION OF THE DRAWINGS

Further features and advantages of the present invention will become more comprehensible from the following description of preferred embodiments thereof given by way of non-limiting examples, in which:

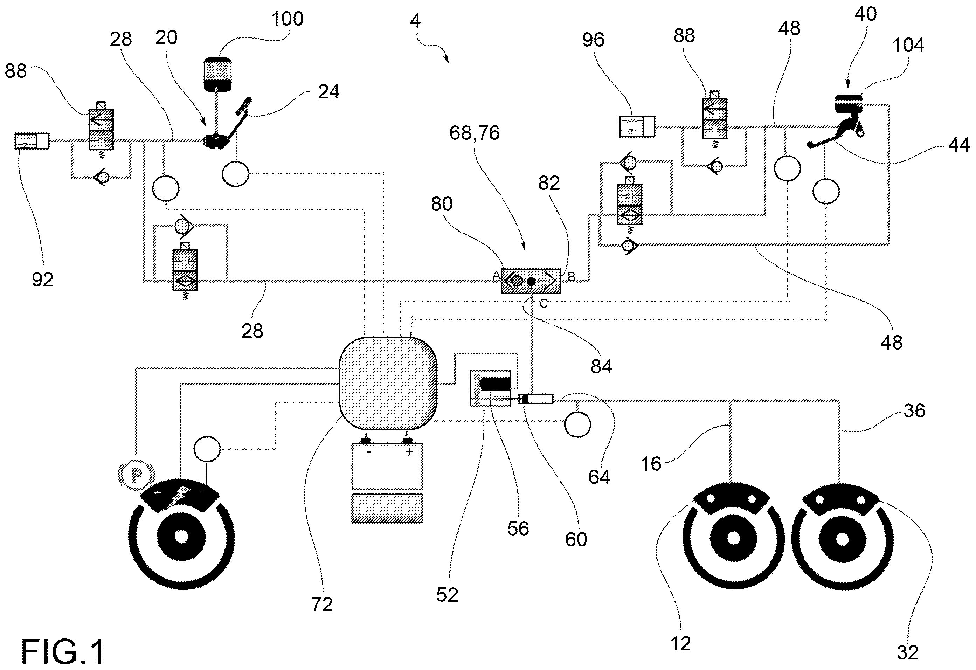

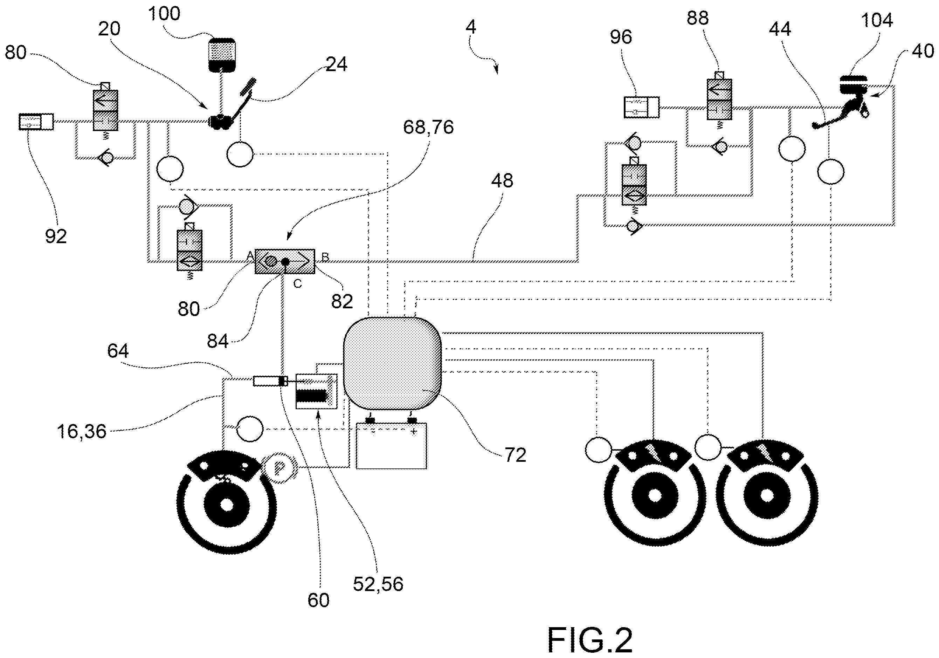

figures 1-8 are diagrammatic views of a braking system according to different embodiments of the present invention.

The elements or parts of elements common to the embodiments described below will be indicated by the same reference numerals.

### DETAILED DESCRIPTION

With reference to the aforesaid figures, reference numeral 4 indicates as a whole a braking system for a vehicle, in particular for a motorcycle 8.

The braking system 4 for motorcycle 8 comprises a first braking device 12 operatively connectable to a first wheel (not shown) of the motorcycle 8, and provided with a first hydraulic supply circuit 16. Typically, the first braking device 12 can comprise a disc brake or a drum brake.

The braking system 4 comprises at first manually operated hydraulic device 20 provided with a first manually operated control 24, such as a lever or a pedal, for example, and a first hydraulic delivery circuit 28 fluidly connectable to the first hydraulic supply circuit 16.

The braking system 4 further comprises a second braking device 32 operatively connectable to said first wheel or to a second wheel (not shown) of the motorcycle 8, and provided with a second hydraulic supply circuit 36 distinct from or coinciding with the first hydraulic supply circuit 16.

Typically, the second braking device 12 can comprise a disc brake or a drum brake. The second hydraulic supply circuit 36 can be physically distinct from the first hydraulic supply circuit 16, but it can also converge into the first hydraulic supply circuit 16 so as to coincide therewith.

The braking system 8 comprises a second manually operated hydraulic device 40 provided with a second manually operated control 44, typically a lever or a pedal, and a second hydraulic delivery circuit 48 fluidly connectable to the second hydraulic supply circuit 36.

The braking system 8 further comprises an electric actuator 52 having electric or electromechanical motor means 56 operatively connected to an electrically or electromechanically operated float 60 fluidly connected to a delivery 64 of the electric actuator 52 fluidly connected to said first hydraulic supply circuit 16 and/or said second hydraulic supply circuit 36.

Typically, the delivery 64 is a hydraulic fluid conduit, which fluidly converge into the first hydraulic supply circuit 16 and/or the second hydraulic supply circuit 36.

Advantageously, said first and second hydraulic delivery circuits 28,48 are fluidly connected to each other by the interposition of valve means 68, better described below.

The braking system 8 is provided with a processing and control unit 72, operatively connected to said electric actuator 52 and said valve means 68, which is programmed so that, in standard operation, in case of actuation of the first manually operated hydraulic device 20 and/or the second manually operated hydraulic device 40 (with which the user requires a braking action from the system 8), it translates the electrically or electromechanically operated float 60 so as to fluidly disconnect the first and/or second hydraulic supply circuit 16,36 from the first and/or second hydraulic delivery circuit 28,48 and simultaneously actuate the at least a first braking device 12 and/or the at least a second braking device 32.

According to an embodiment, the processing and control unit 72 is programmed so that, in back-up operation, it backs up or allows the backing up of the electrically or electromechanically operated float 60 so as to allow the fluid connection between the first and/or second hydraulic supply circuit 16,36 and the first and/or second hydraulic delivery circuit 28,48 and simultaneously actuate the at least a first braking device 12 and/or the at least a second braking device 32, when at least one of the first and second manually operated hydraulic devices 20,40 is actuated.

According to a possible embodiment (figures 1-2), said valve means 68 comprise a diverter valve 76 having a first inlet port 80, fluidly connected to the first hydraulic delivery circuit 28, a second inlet port 82 fluidly connected to the second hydraulic delivery circuit 48, and a single outlet port 84 in fluid communication with the hydraulic delivery circuit, between said first and second hydraulic delivery circuits 28,48, having greater pressure.

It is thus possible to brake using both manually operated lever or pedal controls and that delivering the most pressure, i.e., that on which the user applies the most pressure (whether the pedal or the lever) prevails, in terms of actuation pressure.

According to a possible embodiment of the present invention (figures 1-2), the first hydraulic delivery circuit 28 is provided with at least one control valve 88, of the NO (normally open) or NC (normally closed) type, which in standard operation connects the first hydraulic delivery circuit 28 to a first hydraulic braking simulator 92, and in back-up operation, connects the first hydraulic delivery circuit 28 to the first inlet port 80 of the diverter valve 76, and/or where the second hydraulic delivery circuit 48 is provided with at least one control valve 88 ( of the NO or NC type), which in standard operation connects the second hydraulic delivery circuit 48 to a second hydraulic braking simulator 96, and in back-up operation, connects the second hydraulic delivery circuit 48 to the second inlet port 82 of the diverter valve 76.

According to a possible embodiment (figures 1-2), the first manually operated device 20 is provided with a first hydraulic fluid tank 100 having a preloaded membrane which ensures an overpressure to compensate for a different geodetic height with respect to a second hydraulic fluid tank 104 of the second manually operated device 40. The problem of emptying the tank placed at a higher elevation, typically in motorcycles, is thus solved, this being the tank connected to the handlebar lever, elevated above the tank connected to the pedal.

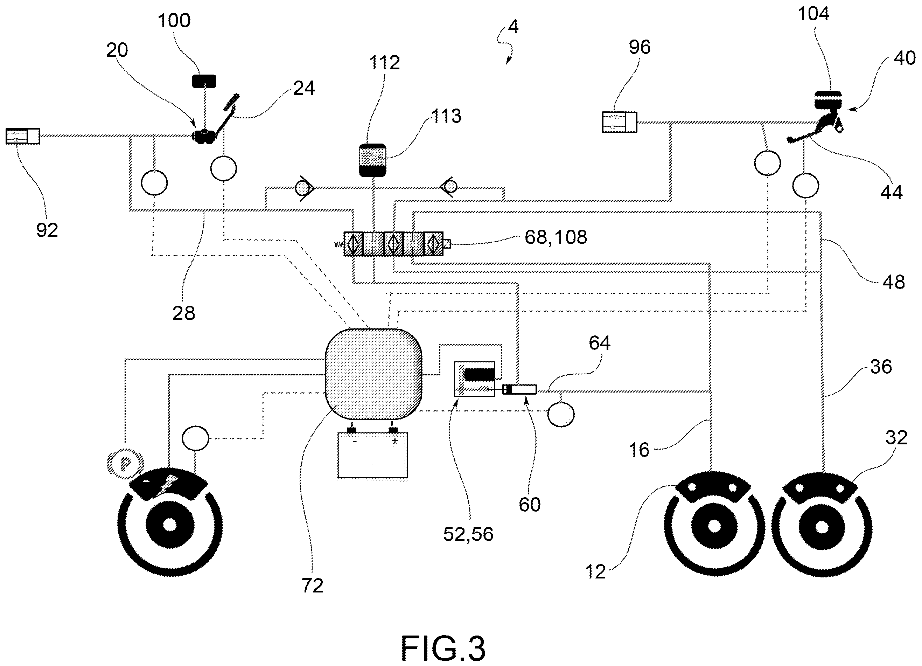

According to a possible embodiment (figures 3-4), the valve means 68 comprise a slide valve 108 controlled by the processing and control unit 72 so that, in the standard operating condition, the slide valve 108 fluidly separates the first hydraulic delivery circuit 28, the second hydraulic delivery circuit 48, and the delivery 64 of the electric actuator 52 from one another, where said delivery 64 supplies said first and second hydraulic supply circuits 16,36.

Moreover, in back-up mode, the slide valve 108 puts into communication the first hydraulic delivery circuit 28 with the first hydraulic supply circuit 16 (which controls a first caliper mounted to the front wheel of the motorcycle, for example), and the second hydraulic delivery circuit 48 with the second hydraulic supply circuit 36 (which controls a second caliper mounted to the same front wheel of the motorcycle, for example), and where the slide valve 108 hydraulically separates the first and second hydraulic supply circuits 16,36. By virtue of this hydraulic separation, the hydraulic circuits of the two manual controls for the rider are mutually independent, thus avoiding the action of one from biasing the characteristic of the other.

According to a possible embodiment (figure 3), the braking system 4 comprises a main hydraulic fluid tank 112 which supplies a first tank 100 of the first manually operated hydraulic device 20 and the second tank 104 of the second manually operated hydraulic device 40, where said main tank 112 is preloaded. Said first and second tanks 100,104 cannot be emptied because of the difference in the respective geodetic height. Preferably, said preload, e.g., obtained by means of a membrane biased by a spring 113, is such as not to generate a pressure which results in an actuation of the braking devices 12,32. Preferably, said valve means 68 comprise a slide valve 108 which selectively connects or disconnects the first and second hydraulic delivery circuits 28,48 to/from the first and second hydraulic supply circuits 16,36, respectively.

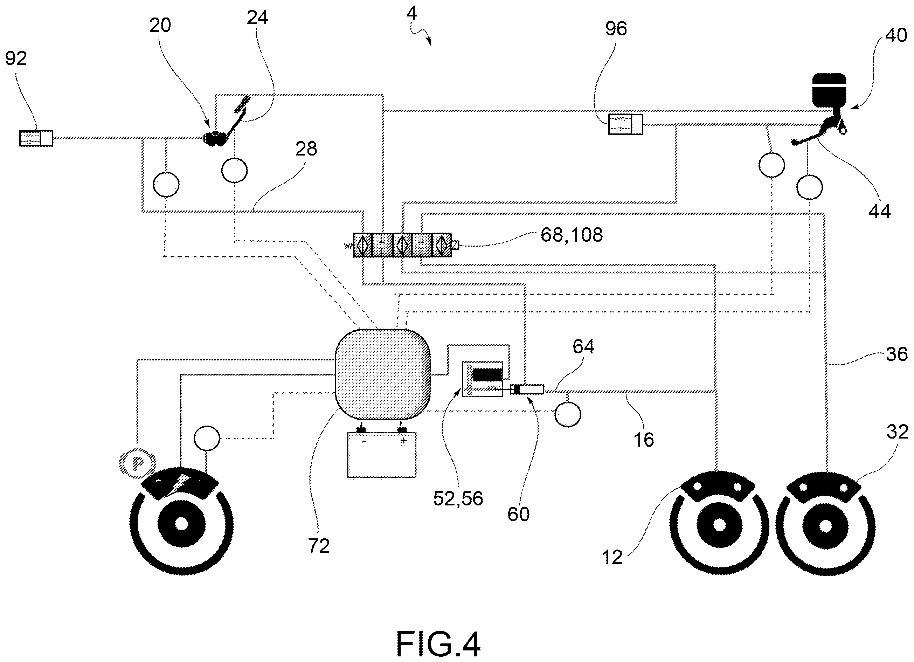

According to a possible embodiment (figure 4), the braking system 4 comprises a first hydraulic braking simulator 92 connected to the first hydraulic delivery circuit 28 and a second hydraulic braking simulator 96 connected to the second hydraulic delivery circuit 48, each of said hydraulic braking simulators 92,96 being provided with a single hydraulic tank. Preferably, the valve means 68 comprise a slide valve 108 which selectively connects or disconnects the first and second hydraulic delivery circuits 28,48 to/from the first and second supply circuits 16,36, respectively. The free fluid bed is thus above everything else in the hydraulic circuit, whereby no preload is needed to avoid emptying across different tanks. Furthermore, in this configuration, non-return valves are also unnecessary since the tank is placed upstream of all pumps.

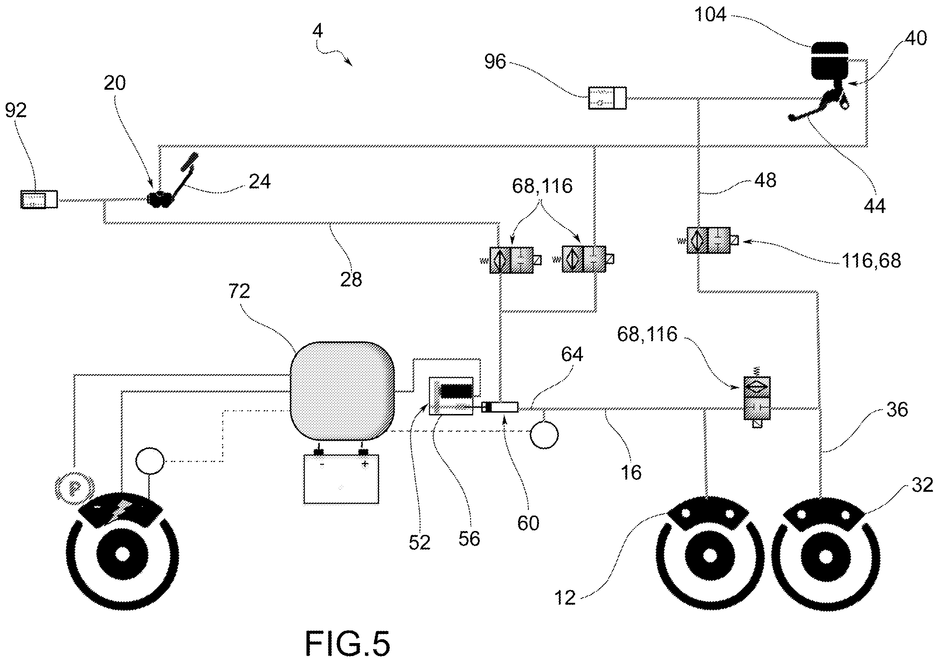

According to a possible embodiment (figure 5), said slide valve 108 is divided into four two-way valves 116, preferably two normally closed (NC) valves and two normally open (NO) valves.

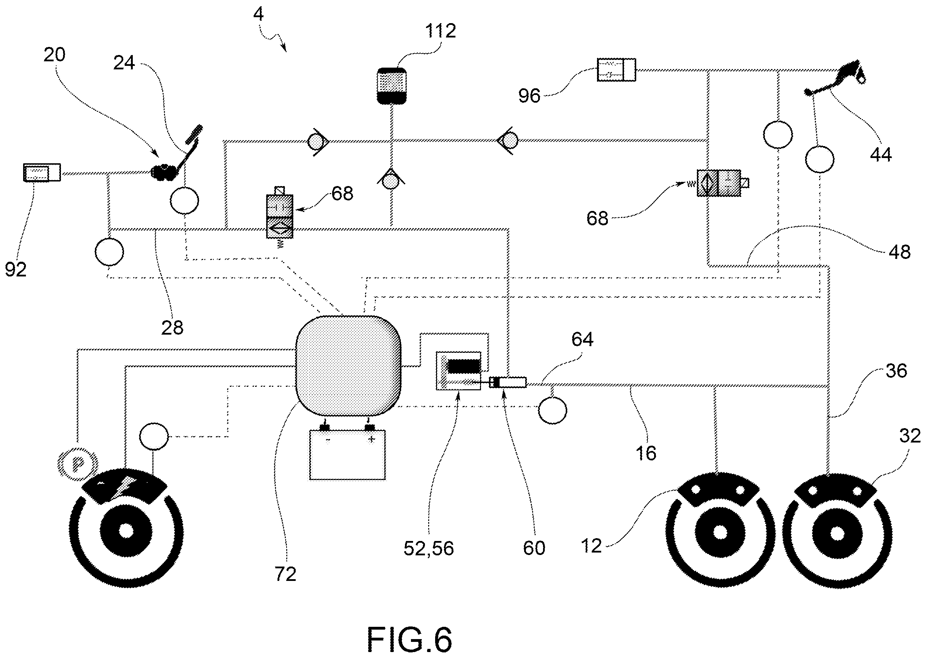

According to a possible embodiment (figure 6), the system 4 comprises a single brake fluid tank 112 which supplies the first and second hydraulic delivery circuits 28,48, upstream of said valve means 68, said single tank 112 being preloaded under pressure (so as to ensure complete filling of the manual controls, whether a lever or a pedal, as a result of thermal expansion and pad wear, in both standard and back-up modes.

The absence of separate tanks provided on each manually operated hydraulic device 20,40 allows two functions. In back-up operation, it allows a pressure generation, e.g., by the pedal, and also pressurizes the manual lever control at rest, which would not be possible with a tank at ambient pressure. Moreover, the manually operated control, in particular the brake lever, is particularly aesthetically minimal, making the style of these components particularly innovative and unique.

For example (figure 6), the first and second hydraulic supply circuits 16,36 are fluidly connected to two braking devices 12,32 arranged at the front of the vehicle.

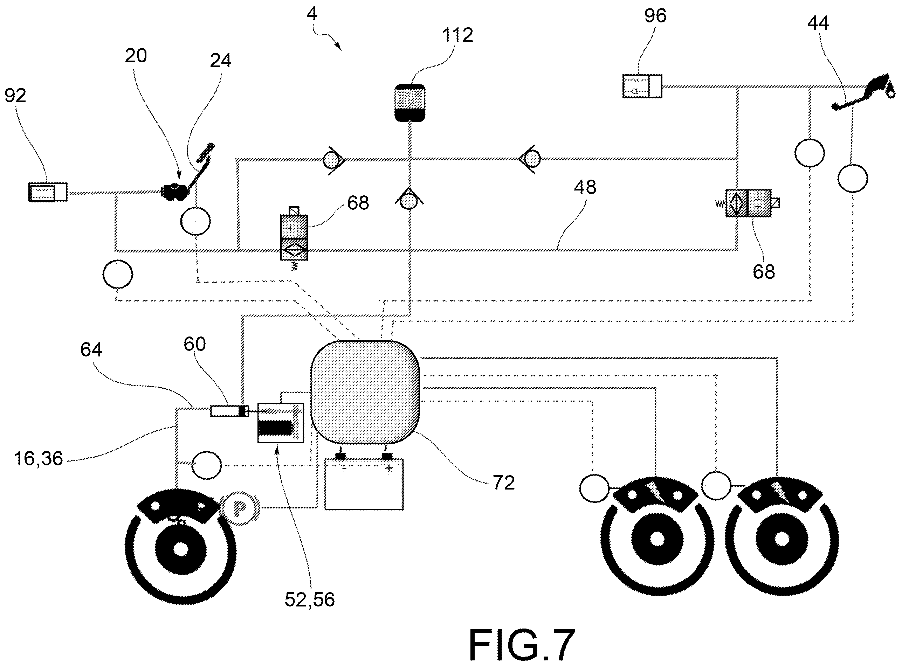

An embodiment (figure 7) is also possible, in which the first and second hydraulic supply circuits are coincident and fluidly connected to a single braking device arranged on the rear wheel of the motorcycle.

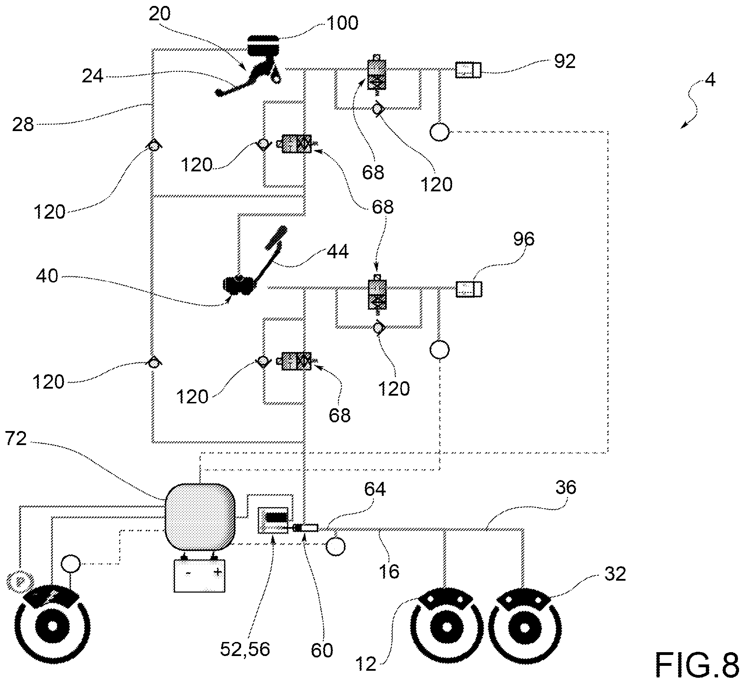

According to a further possible embodiment (figure 8), said first and second manually operated hydraulic devices 20,40 are arranged in series with each other and with the first and second hydraulic supply circuits 16,36. Each manually operated hydraulic device 20,40 comprises a piston provided with a one-way lip seal (not shown) at the outlet of the device. It is thus possible to control a single caliper with both manually operated controls 24,44 according to a maximum logic.

For example, the braking system 4 comprises a brake fluid tank connected directly upstream of the electric actuator by means of a plurality of one-way valves 120 which allow the leakage of fluid with the system at atmospheric pressure while preventing the passage in the opposite direction during the actuations of the braking devices in both standard operation and back-up operation.

According to a possible embodiment (figure 8), said valve means 68 comprise two normally open hydraulic valves 69 which fluidly connect both the manually operated hydraulic devices 20,40 and two normally closed hydraulic valves 70 to allow the passage of pressure between said manually operated hydraulic devices 20,40 and the hydraulic supply circuits 16,36 and prevent the absorption of volume by absorbers 92,96 connected to the manually operated hydraulic devices in back-up.

As can be appreciated from the description above, the present invention allows overcoming the drawbacks presented in the prior art.

In particular, the braking system of the present invention allows actuating the hydraulic back-up by means of both controls (lever and brake pedal) in case a failure of the E/E system (ECU, actuators, sensors, etc.) or in case of lack of power supply (disconnected battery) in combination with a partially fluid-free braking system actuation (at least one caliper or fully electromechanical axle - DRY).

Finally, the present invention allows providing braking systems being compatible with electric vehicles (blending with regenerative braking, residual torque reduction).

In order to meet contingent, specific needs, those skilled in the art may make several changes and variations to the braking systems and motorcycles described above, all contained within the present invention as mechanical and/or functional equivalents.

The scope of protection of the invention is defined by the following claims.

## Claims

1. A braking system (4) for a motorcycle comprising:
- a first braking device (12) operatively connectable to a first wheel of the motorcycle, and provided with a first hydraulic supply circuit (16),
- a first manually operated hydraulic device (20) provided with a first manually operated control (24) and a first hydraulic delivery circuit (28) fluidly connectable to the first hydraulic supply circuit (16),
- a second braking device (32) operatively connectable to said first wheel or to a second wheel of the motorcycle, and provided with a second hydraulic supply circuit (36), distinct from or coinciding with the first hydraulic supply circuit (16),
- **characterized in that** the braking system (4) comprises a second manually operated hydraulic device (40) provided with a second manually operated control (44) and a second hydraulic delivery circuit (48) fluidly connectable to the second hydraulic supply circuit (36),
- an electric actuator (52) having electric or electromechanical motor means (56) operatively connected to an electrically or electromechanically operated float (60) fluidly connected to a delivery (64) of the electric actuator (52) connected to said first hydraulic supply circuit (16) and/or to said second hydraulic supply circuit (36),
- wherein said first and second hydraulic delivery circuits (28,48) are fluidly connected to each other by the interposition of valve means (68),
- wherein the braking system (4) is provided with a processing and control unit (72), operatively connected to said electric actuator (52) and to said valve means (68), the processing and control unit (72) being programmed so that:
- in standard operation, in the event of operation of the first manually operated hydraulic device (20) and/or the second manually operated hydraulic device (40), it translates the electrically or electromechanically operated float (60) so as to fluidly disconnect the first and/or the second hydraulic supply circuit (16,36) from the first and/or second hydraulic delivery circuit (28,48) and simultaneously operate the at least a first braking device (12) and/or the at least a second braking device (32).

2. The braking system (4) according to claim 1, wherein the processing and control unit (72) is programmed so that:
in back-up operation, it backs up or allows the backing up of the electrically or electromechanically operated float (60) so as to allow the fluid connection between the first and/or the second hydraulic supply circuit (16,36) from the first and/or second hydraulic delivery circuit (28,48) and simultaneously operate the at least a first braking device (12) and/or the at least a second braking device (32), when at least one between the first and the second manually operated hydraulic device (20,40) is operated.

3. The braking system (4) for a motorcycle according to claim 1, wherein said valve means (68) comprise a diverter valve (76) having a first inlet port (80), fluidly connected to the first hydraulic delivery circuit (48), a second inlet port (82) fluidly connected to the second hydraulic delivery circuit (48), and a single outlet port (84) in fluid communication with the hydraulic delivery circuit, between said first and second hydraulic delivery circuit (28,48), having greater pressure.

4. The braking system (4) for a motorcycle according to claim 1, 2 or 3, wherein the first hydraulic delivery circuit (28) is provided with at least one control valve (88), which in standard operation connects the first hydraulic delivery circuit (28) to a first hydraulic braking simulator (92) and in back-up operation, connects the first hydraulic delivery circuit (28) to the first inlet port (80) of the diverter valve (76), and/or wherein the second hydraulic delivery circuit (48) is provided with at least one control valve (88), which in standard operation connects the second hydraulic delivery circuit (48) to a second hydraulic braking simulator (96) and in back-up operation, connects the second hydraulic delivery circuit (48) to the second inlet port (82) of the diverter valve (76).

5. The braking system (4) for a motorcycle according to any one of claims 1 to 4, wherein the first manually operated device (20) is provided with a first hydraulic fluid tank (100) having a preloaded membrane which ensures an overpressure to compensate a different geodetic quota with respect to a second hydraulic fluid tank (104) of the second manually operated device (40).

6. The braking system (4) for a motorcycle according to claim 1 or 2, wherein said valve means (68) comprise a slide valve (108) controlled by the processing and control unit (72) so that:
in the standard condition, the slide valve (108) fluidly separates the first hydraulic delivery circuit (28), the second hydraulic delivery circuit (48) and the delivery (64) of the electric actuator (52) from each other, wherein said delivery (64) supplies said first and second hydraulic supply circuit (16,36),
in back-up mode, the slide valve (76) connects the first hydraulic delivery circuit (28) with the first hydraulic supply circuit (16), and the second hydraulic delivery circuit (48) with the second hydraulic supply circuit (36) and wherein the slide valve (76) hydraulically separates the first and the second hydraulic supply circuit (16,36).

7. The braking system (4) for a motorcycle according to claim 6, wherein the system (4) comprises a main hydraulic fluid tank (112) which supplies a first tank (100) of the first manually operated hydraulic device (20) and a second tank (104) of the second manually operated hydraulic device (40), wherein said main tank (112) is preloaded, and wherein said preload is such as not to generate a pressure which determines an operation of the braking devices (12,32), wherein said valve means (68) comprise a slide valve (76) which selectively connects or disconnects the first and the second hydraulic delivery circuit (28,48) with the first and the second hydraulic supply circuit (16,36), respectively.

8. The braking system (4) for a motorcycle according to claim 6, wherein the system (4) comprises a first hydraulic braking simulator (92) connected to the first hydraulic delivery circuit (28) and a second hydraulic braking simulator (96) connected to the second hydraulic delivery circuit (48), each of said hydraulic braking simulators (92,96) being provided with a single hydraulic tank (100,104), wherein said valve means (68) comprise a slide valve (76) which selectively connects or disconnects the first and the second hydraulic delivery circuit (28,48) with the first and the second supply circuit (16,36), respectively.

9. The braking system (4) for a motorcycle according to claim 6, 7 or 8, wherein said slide valve (76) is divided into four two-way valves (116), preferably two normally closed valves and two normally open valves.

10. The braking system (4) for a motorcycle according to claim 1 or 2, wherein the system (4) comprises a single brake fluid tank (112) which supplies the first and the second hydraulic delivery circuit (28,48), upstream of said valve means (68), said single tank (112) being preloaded under pressure.

11. The braking system (4) for a motorcycle according to claim 10, wherein the first and the second hydraulic supply circuit (16,36) are fluidly connected to two braking devices (12,32) arranged at the front of the vehicle.

12. The braking system (4) for a motorcycle according to claim 1 or 2, wherein the first and the second hydraulic supply circuit (16,36) are coincident and fluidly connected to a single braking device at the rear of the vehicle.

13. The braking system (4) for a motorcycle according to claim 1 or 2, wherein said first and second manually operated hydraulic devices (20,40) are arranged in series with each other and with the first and second hydraulic supply circuit (16,36), wherein each manually operated hydraulic device (20,40) comprises a piston provided with a one-way lip seal exiting the device itself.

14. The braking system (4) for a motorcycle according to claim 13, wherein the system comprises a brake fluid tank (112) connected directly upstream of the electric actuator by means of a plurality of series of one-way valves (120) which allow the leakage of fluid with the system at atmospheric pressure and at the same time prevent the passage in the opposite direction during the operations of the braking devices (12,32) both in standard operation and in back-up operation.

15. The braking system (4) for a motorcycle according to claim 13 or 14, wherein said valve means (68) comprise two normally open hydraulic valves (69) which fluidly connect both the manually operated hydraulic devices (20,40) and two normally closed hydraulic valves (70) to allow the passage of pressure between said manually operated hydraulic devices (20,40) and the hydraulic supply circuits (16,36) and prevent the absorption of volume by absorbers (92,96) connected to the manually operated hydraulic devices in backup.

## Patentansprüche

1. Bremssystem (4) für ein Motorrad, umfassend:
- eine erste Bremsvorrichtung (12), die operativ mit einem ersten Rad des Motorrads verbunden werden kann und mit einer ersten hydraulischen Versorgungsschaltung(16) versehen ist,
- eine erste manuell betätigte hydraulische Vorrichtung (20), die mit einer ersten manuell betätigten Steuerung (24) und einer ersten hydraulischen Versorgungsschaltung (28) versehen ist, der in Fluidverbindung mit der ersten hydraulischen Versorgungsschaltung (16) gebracht werden kann,
- eine zweite Bremsvorrichtung (32), die operativ mit dem ersten Rad oder mit einem zweiten Rad des Motorrads verbunden werden kann und mit einer zweiten hydraulischen Versorgungsschaltung (36) versehen ist, der von der ersten hydraulischen Versorgungsschaltung (16) verschieden ist oder mit dieser zusammenfällt,
- **dadurch gekennzeichnet, dass** das Bremssystem (4) eine zweite manuell betätigte hydraulische Vorrichtung (40) umfasst, die mit einer zweiten manuell betätigten Steuerung (44) und einer zweiten hydraulischen Versorgungsschaltung (48) versehen ist, der in Fluidverbindung mit der zweiten hydraulischen Versorgungsschaltung (36) gebracht werden kann,
- einen elektrischen Aktuator (52) aufweisend elektrische oder elektromechanische Motormittel (56), die operativ mit einem elektrisch oder elektromechanisch betätigten Schwimmer (60) verbunden sind, der in Fluidverbindung mit einer Versorgung (64) des elektrischen Aktuators (52) steht, die mit der ersten hydraulischen Versorgungsschaltung (16) und/oder mit der zweiten hydraulischen Versorgungsschaltung (36) steht,
- wobei die erste und die zweite hydraulischen Versorgungsschaltungen (28,48) über dazwischen angeordnete Ventilmittel (68) in Fluidverbindung miteinander stehen,
- wobei das Bremssystem (4) mit einer Verarbeitungs- und Steuereinheit (72) versehen ist, die operativ mit dem elektrischen Aktuator (52) und mit den Ventilmitteln (68) verbunden ist, wobei die Verarbeitungs- und Steuereinheit (72) programmiert ist, sodass:
- im Standardbetrieb im Falle der Betätigung der ersten manuell betätigten hydraulischen Vorrichtung (20) und/oder der zweiten manuell betätigten hydraulischen Vorrichtung (40), sie den elektrisch oder elektromechanisch betätigten Schwimmer (60) verschiebt, sodass die erste und/oder die zweite hydraulische Versorgungsschaltung (16,36) fluidisch von der ersten und/oder von der zweiten hydraulischen Versorgungsschaltung (28,48) getrennt wird und gleichzeitig die mindestens eine erste Bremsvorrichtung (12) und/oder die mindestens eine zweite Bremsvorrichtung (32) betätigt wird.

2. Bremssystem (4) nach Anspruch 1, wobei die Verarbeitungs- und Steuereinheit (72) programmiert ist, sodass:
im Back-up-Betrieb, sie den Back-up des elektrisch oder elektromechanisch betätigten Schwimmer (60) durchführt oder erlaubt, um die Fluidverbindung zwischen der ersten und/oder der zweiten hydraulischen Versorgungsschaltung (16,36) von der ersten und/oder der zweiten hydraulischen Versorgungsschaltung (28,48) zu ermöglichen und gleichzeitig die mindestens eine erste Bremsvorrichtung (12) und/oder die mindestens eine zweite Bremsvorrichtung (32) zu betätigen, wenn mindestens eine der ersten und der zweiten manuell betätigten hydraulischen Vorrichtungen (20,40) betätigt wird.

3. Bremssystem (4) für ein Motorrad nach Anspruch 1, wobei die Ventilmittel (68) ein Ablenkungsventil (76) umfassen, das eine erste Einlassöffnung (80) aufweist, die in Fluidverbindung mit der ersten hydraulischen Versorgungsschaltung (48) steht, eine zweite Einlassöffnung (82), die in Fluidverbindung mit der zweiten hydraulischen Versorgungsschaltung (48) steht, sowie eine einzige Auslassöffnung (84), die in Fluidverbindung mit der hydraulischen Versorgungsschaltung steht, die zwischen der ersten und der zweiten hydraulischen Versorgungsschaltung (28,48) den höheren Druck aufweist.

4. Bremssystem (4) für ein Motorrad nach Anspruch 1, 2 oder 3, wobei die erste hydraulische Versorgungsschaltung (28) mit mindestens einem Steuerventil (88) versehen ist, das im Standardbetrieb die erste hydraulische Versorgungsschaltung (28) mit einem ersten hydraulischen Bremssimulator (92) verbindet und im Back-up-Betrieb die erste hydraulische Versorgungsschaltung (28) mit der ersten Einlassöffnung (80) des Ablenkungsventils (76) verbindet, und/oder wobei die zweite hydraulische Versorgungsschaltung (48) mit mindestens einem Steuerventil (88) versehen ist, das im Standardbetrieb die zweite hydraulische Versorgungsschaltung (48) mit einem zweiten hydraulischen Bremssimulator (96) verbindet und im Back-up-Betrieb die zweite hydraulische Versorgungsschaltung (48) mit der zweiten Einlassöffnung (82) des Ablenkungsventils (76) verbindet.

5. Bremssystem (4) für ein Motorrad nach einem der Ansprüche 1 bis 4, wobei die erste manuell betätigte Vorrichtung (20) mit einem ersten Hydraulikflüssigkeitsbehälter (100) versehen ist, der eine vorgespannte Membran aufweist, die einen Überdruck sicherstellt, um einen Unterschied der geodätischen Höhe in Bezug auf einen zweiten Hydraulikflüssigkeitsbehälter (104) der zweiten manuell betätigten Vorrichtung (40) zu kompensieren.

6. Bremssystem (4) für ein Motorrad nach Anspruch 1 oder 2, wobei die Ventilmittel (68) ein Schieberventil (108) umfassen, das von der Verarbeitungs- und Steuereinheit (72) gesteuert wird, sodass:
im Standardzustand das Schieberventil (108) die erste hydraulische Versorgungsschaltung (28), die zweite hydraulische Versorgungsschaltung (48) und die Versorgung (64) des elektrischen Aktuators (52) fluidisch voneinander trennt, wobei die Versorgung (64) die erste und die zweite hydraulische Versorgungsschaltung (16,36) versorgt,
im Back-up-Betrieb das Schieberventil (76) die erste hydraulische Versorgungsschaltung (28) mit der ersten hydraulischen Versorgungsschaltung (16) und die zweite hydraulische Versorgungsschaltung (48) mit der zweiten hydraulischen Versorgungsschaltung (36) verbindet und wobei das Schieberventil (76) die erste und die zweite hydraulische Versorgungsschaltung (16,36) hydraulisch voneinander trennt.

7. Bremssystem (4) für ein Motorrad nach Anspruch 6, wobei das System (4) einen Haupthydraulikflüssigkeitsbehälter (112) umfasst, der einen ersten Behälter (100) der ersten manuell betätigten hydraulischen Vorrichtung (20) und einen zweiten Behälter (104) der zweiten manuell betätigten hydraulischen Vorrichtung (40) versorgt, wobei der Hauptbehälter (112) vorgespannt wird und wobei diese Vorspannung derart ist, dass kein Druck erzeugt wird, der eine Betätigung der Bremsvorrichtungen (12,32) bewirkt, wobei die Ventilmittel (68) ein Schieberventil (76) umfassen, das die erste und die zweite hydraulischen Versorgungsschaltung (28,48) selektiv mit der ersten und der zweiten hydraulischen Versorgungsschaltung (16,36) verbindet oder davon trennt.

8. Bremssystem (4) für ein Motorrad nach Anspruch 6, wobei das System (4) einen ersten hydraulischen Bremssimulator (92), der mit der ersten hydraulischen Versorgungsschaltung (28) verbunden ist, und einen zweiten hydraulischen Bremssimulator (96), der mit der zweiten hydraulischen Versorgungsschaltung (48) verbunden ist, umfasst, wobei jeder der hydraulischen Bremssimulatoren (92,96) mit einem einzigen Hydraulikbehälter (100,104) versehen ist, wobei die Ventilmittel (68) ein Schieberventil (76) umfassen, das die erste und die zweite hydraulische Versorgungsschaltung (28,48) selektiv mit der ersten und der zweiten Versorgungsschaltung (16,36) verbindet oder davon trennt.

9. Bremssystem (4) für ein Motorrad nach Anspruch 6, 7 oder 8, wobei das Schieberventil (76) in vier Zweiwege-Ventile (116) unterteilt wird, vorzugsweise zwei normalerweise geschlossene Ventile und zwei normalerweise offene Ventile.

10. Bremssystem (4) für ein Motorrad nach Anspruch 1 oder 2, wobei das System (4) einen einzigen Bremsflüssigkeitsbehälter (112) umfasst, der die erste und die zweite hydraulischen Versorgungsschaltungen (28,48) stromaufwärts der Ventilmittel (68) versorgt, wobei der einzige Behälter (112) unter Druck vorgespannt wird.

11. Bremssystem (4) für ein Motorrad nach Anspruch 10, wobei die erste und die zweite hydraulische Versorgungsschaltung (16,36) in Fluidverbindung mit zwei Bremsvorrichtungen (12,32) stehen, die an der Vorderseite des Fahrzeugs angeordnet sind.

12. Bremssystem (4) für ein Motorrad nach Anspruch 1 oder 2, wobei die erste und die zweite hydraulische Versorgungsschaltung (16,36) zusammenfallen und in Fluidverbindung mit einer einzigen Bremsvorrichtung stehen, die an der Rückseite des Fahrzeugs angeordnet ist.

13. Bremssystem (4) für ein Motorrad nach Anspruch 1 oder 2, wobei die ersten und die zweiten manuell betätigten hydraulischen Vorrichtungen (20,40) in Reihe zueinander und mit dem ersten und der zweiten hydraulischen Versorgungsschaltung (16,36) angeordnet sind, wobei jede manuell betätigte hydraulische Vorrichtung (20,40) einen Kolben umfasst, der mit einer Einweg-Lippendichtung versehen ist, die aus der Vorrichtung selbst austritt.

14. Bremssystem (4) für ein Motorrad nach Anspruch 13, wobei das System einen Bremsflüssigkeitsbehälter (112) umfasst, der direkt stromaufwärts des elektrischen Aktuators mittels einer Mehrzahl von Reihen von Einweg-Ventilen (120) verbunden ist, die das Austreten von Fluid bei atmosphärischem Druck des Systems ermöglichen und gleichzeitig den Durchgang in entgegengesetzter Richtung während der Betätigung der Bremsvorrichtungen (12,32) sowohl im Standardbetrieb als auch im Back-up-Betrieb verhindern.

15. Bremssystem (4) für ein Motorrad nach Anspruch 13 oder 14, wobei die Ventilmittel (68) zwei normalerweise offene hydraulische Ventile (69) umfassen, die sowohl die manuell betätigten hydraulischen Vorrichtungen (20,40) als auch die zwei normalerweise geschlossene hydraulische Ventile (70) in Fluidverbindung bringen, um den Durchgang von Druck zwischen den manuell betätigten hydraulischen Vorrichtungen (20,40) und den hydraulischen Versorgungsschaltungen (16,36) zu ermöglichen und die Volumenaufnahme durch Absorber (92,96), die mit den manuell betätigten hydraulischen Vorrichtungen im Back-up-Betrieb verbunden sind, zu verhindern.

## Revendications

1. Système de freinage (4) pour une motocyclette comprenant :
un premier dispositif de freinage (12) apte à être raccordé fonctionnellement à une première roue de la motocyclette et pourvu d'un premier circuit hydraulique d'alimentation (16),
un premier dispositif hydraulique à commande manuelle (20) pourvu d'une première commande manuelle (24) et d'un premier circuit hydraulique de refoulement (28) apte à être raccordé fluidiquement au premier circuit hydraulique d'alimentation (16),
un second dispositif de freinage (32) apte à être raccordé fonctionnellement à ladite première roue ou à une seconde roue de la motocyclette et pourvu d'un second circuit hydraulique d'alimentation (36), distinct du premier circuit hydraulique d'alimentation (16) ou coïncidant avec celui-ci,
**caractérisé en ce que** le système de freinage (4) comprend un second dispositif hydraulique à commande manuelle (40) pourvu d'une seconde commande manuelle (44) et d'un second circuit hydraulique de refoulement (48) apte à être raccordé fluidiquement au second circuit hydraulique d'alimentation (36),
un actionneur électrique (52) comportant des moyens moteurs électriques ou électromécaniques (56) reliés fonctionnellement à un flotteur commandé électriquement ou électromécaniquement (60) relié fluidiquement à une sortie (64) de l'actionneur électrique (52) reliée audit premier circuit hydraulique d'alimentation (16) et/ou audit second circuit hydraulique d'alimentation (36),
dans lequel lesdits premier et second circuits hydrauliques de refoulement (28,48) sont reliés fluidiquement l'un à l'autre par l'interposition de moyens de vanne (68),
dans lequel le système de freinage (4) est pourvu d'une unité de traitement et de commande (72) reliée fonctionnellement audit actionneur électrique (52) et auxdits moyens de vanne (68), l'unité de traitement et de commande (72) étant programmée de sorte que :
en fonctionnement standard, en cas d'actionnement du premier dispositif hydraulique à commande manuelle (20) et/ou du second dispositif hydraulique à commande manuelle (40), elle déplace le flotteur commandé électriquement ou électromécaniquement (60) de manière à déconnecter fluidiquement le premier et/ou le second circuit hydraulique d'alimentation (16,36) du premier et/ou du second circuit hydraulique de refoulement (28,48) et à actionner simultanément ledit au moins un premier dispositif de freinage (12) et/ou ledit au moins un second dispositif de freinage (32).

2. Système de freinage (4) selon la revendication 1, dans lequel l'unité de traitement et de commande (72) est programmée de sorte que :
en fonctionnement de secours, elle rappelle ou permet le rappel du flotteur commandé électriquement ou électromécaniquement (60) de manière à permettre la connexion fluidique entre le premier et/ou le second circuit hydraulique d'alimentation (16,36) et le premier et/ou le second circuit hydraulique de refoulement (28,48) et à actionner simultanément ledit au moins un premier dispositif de freinage (12) et/ou ledit au moins un second dispositif de freinage (32), lorsqu'au moins l'un entre le premier et le second dispositif hydraulique à commande manuelle (20,40) est actionné.

3. Système de freinage (4) pour une motocyclette selon la revendication 1, dans lequel lesdits moyens de vanne (68) comprennent une vanne de dérivation (76) comportant un premier orifice d'entrée (80) relié fluidiquement au premier circuit hydraulique de refoulement (48), un second orifice d'entrée (82) relié fluidiquement au second circuit hydraulique de refoulement (48), et un unique orifice de sortie (84) en communication fluidique avec le circuit hydraulique de refoulement, entre ledit premier et ledit second circuit hydraulique de refoulement (28,48), présentant la pression la plus élevée.

4. Système de freinage (4) pour une motocyclette selon la revendication 1, 2 ou 3, dans lequel le premier circuit hydraulique de refoulement (28) est pourvu d'au moins une vanne de commande (88) qui, en fonctionnement standard, relie le premier circuit hydraulique de refoulement (28) à un premier simulateur hydraulique de freinage (92) et, en fonctionnement de secours, relie le premier circuit hydraulique de refoulement (28) au premier orifice d'entrée (80) de la vanne de dérivation (76), et/ou
dans lequel le second circuit hydraulique de refoulement (48) est pourvu d'au moins une vanne de commande (88) qui, en fonctionnement standard, relie le second circuit hydraulique de refoulement (48) à un second simulateur hydraulique de freinage (96) et, en fonctionnement de secours, relie le second circuit hydraulique de refoulement (48) au second orifice d'entrée (82) de la vanne de dérivation (76).

5. Système de freinage (4) pour une motocyclette selon l'une quelconque des revendications 1 à 4, dans lequel le premier dispositif à commande manuelle (20) est pourvu d'un premier réservoir de fluide hydraulique (100) comportant une membrane préchargée qui assure une surpression afin de compenser une différence de cote géodésique par rapport à un second réservoir de fluide hydraulique (104) du second dispositif à commande manuelle (40).

6. Système de freinage (4) pour une motocyclette selon la revendication 1 ou 2, dans lequel lesdits moyens de vanne (68) comprennent une vanne à tiroir (108) commandée par l'unité de traitement et de commande (72) de sorte que :
en condition standard, la vanne à tiroir (108) sépare fluidiquement le premier circuit hydraulique de refoulement (28), le second circuit hydraulique de refoulement (48) et la sortie (64) de l'actionneur électrique (52) les uns des autres, ladite sortie (64) alimentant lesdits premier et second circuits hydrauliques d'alimentation (16,36),
en mode de secours, la vanne à tiroir (76) relie le premier circuit hydraulique de refoulement (28) au premier circuit hydraulique d'alimentation (16), et le second circuit hydraulique de refoulement (48) au second circuit hydraulique d'alimentation (36), et dans lequel la vanne à tiroir (76) sépare hydrauliquement le premier et le second circuits hydrauliques d'alimentation (16,36).

7. Système de freinage (4) pour une motocyclette selon la revendication 6, dans lequel le système (4) comprend un réservoir principal de fluide hydraulique (112) qui alimente un premier réservoir (100) du premier dispositif hydraulique à commande manuelle (20) et un second réservoir (104) du second dispositif hydraulique à commande manuelle (40), dans lequel ledit réservoir principal (112) est préchargé, et dans lequel ladite précharge est telle qu'elle ne génère pas une pression déterminant une action des dispositifs de freinage (12,32), dans lequel lesdits moyens de vanne (68) comprennent une vanne à tiroir (76) qui relie ou déconnecte sélectivement le premier et le second circuits hydrauliques de refoulement (28,48) aux premier et second circuits hydrauliques d'alimentation (16,36), respectivement.

8. Système de freinage (4) pour une motocyclette selon la revendication 6, dans lequel le système (4) comprend un premier simulateur hydraulique de freinage (92) relié au premier circuit hydraulique de refoulement (28) et un second simulateur hydraulique de freinage (96) relié au second circuit hydraulique de refoulement (48), chacun desdits simulateurs hydrauliques de freinage (92,96) étant pourvu d'un unique réservoir hydraulique (100,104), dans lequel lesdits moyens de vanne (68) comprennent une vanne à tiroir (76) qui relie ou déconnecte sélectivement le premier et le second circuits hydrauliques de refoulement (28,48) aux premier et second circuits d'alimentation (16,36), respectivement.

9. Système de freinage (4) pour une motocyclette selon la revendication 6, 7 ou 8, dans lequel ladite vanne à tiroir (76) est divisée en quatre vannes bidirectionnelles (116), de préférence deux vannes normalement fermées et deux vannes normalement ouvertes.

10. Système de freinage (4) pour une motocyclette selon la revendication 1 ou 2, dans lequel le système (4) comprend un unique réservoir de liquide de frein (112) qui alimente les premier et second circuits hydrauliques de refoulement (28,48), en amont desdits moyens de vanne (68), ledit réservoir unique (112) étant préchargé sous pression.

11. Système de freinage (4) pour une motocyclette selon la revendication 10, dans lequel les premier et second circuits hydrauliques d'alimentation (16,36) sont reliés fluidiquement à deux dispositifs de freinage (12,32) disposés à l'avant du véhicule.

12. Système de freinage (4) pour une motocyclette selon la revendication 1 ou 2, dans lequel les premier et second circuits hydrauliques d'alimentation (16,36) sont coïncidents et reliés fluidiquement à un unique dispositif de freinage à l'arrière du véhicule.

13. Système de freinage (4) pour une motocyclette selon la revendication 1 ou 2, dans lequel lesdits premier et second dispositifs hydrauliques à commande manuelle (20,40) sont disposés en série l'un par rapport à l'autre et avec les premier et second circuits hydrauliques d'alimentation (16,36), dans lequel chaque dispositif hydraulique à commande manuelle (20,40) comprend un piston pourvu d'un joint à lèvre unidirectionnel sortant du dispositif lui-même.

14. Système de freinage (4) pour une motocyclette selon la revendication 13, dans lequel le système comprend un réservoir de liquide de frein (112) relié directement en amont de l'actionneur électrique au moyen d'une pluralité de séries de vannes unidirectionnelles (120) qui permettent la fuite de fluide avec le système à pression atmosphérique et, en même temps, empêchent le passage dans le sens opposé durant les opérations des dispositifs de freinage (12,32), tant en fonctionnement standard qu'en fonctionnement de secours.

15. Système de freinage (4) pour une motocyclette selon la revendication 13 ou 14, dans lequel lesdits moyens de vanne (68) comprennent deux vannes hydrauliques normalement ouvertes (69) qui relient fluidiquement les deux dispositifs hydrauliques à commande manuelle (20,40) et deux vannes hydrauliques normalement fermées (70) afin de permettre le passage de la pression entre lesdits dispositifs hydrauliques à commande manuelle (20,40) et les circuits hydrauliques d'alimentation (16,36) et d'empêcher l'absorption de volume par des absorbeurs (92,96) reliés aux dispositifs hydrauliques à commande manuelle en secours.
